# EUROPEAN PATENT APPLICATION

(11) **EP 3 798 868 A1**
(43) Date of publication of application: **31.03.2021**
(21) Application number: 19199476.3
(22) Date of filing: 25.09.2019
(51) Int. Cl.: G06F 16/907, G06F 16/955, G06F 9/445, G06F 21/62, G06K 17/00

(54) **METHOD OF PROVIDING RESOURCES TO A TERMINAL, SERVER FOR PROVIDING RESOURCES TO A TERMINAL, AND CORRESPONDING PROGRAM**

(71) Applicant: CI Cloud Item GmbH, 85298 Scheyern (DE)
(72) Inventor: Neumair, Andreas, 85298 Scheyern (DE); Neumair, Simon, 85298 Scheyern (DE); Neumair, Matthias, 85298 Scheyern (DE)
(74) Representative: MERH-IP Matias Erny Reichl Hoffmann Patentanwälte PartG mbB

(57) **Abstract**

This application relates to a method, using a server with a database coupled thereto, of providing resources to a terminal. The method comprises receiving unique identification information from a first terminal, wherein the unique identification information is associated with a machine-readable code; receiving, from the first terminal, at least one electronic reference to an external resource together with an access condition for the electronic reference; storing the at least one electronic reference and the access condition in association with the unique identification information in the database; receiving data generated by capturing the machine-readable code from a second terminal; receiving, from the second terminal, user-specific information of a user of the second terminal; determining, based on the data generated by capturing the machine readable code, all those electronic references that are stored in the database in association with the unique identification information associated with the machine-readable code; determining, for each of the electronic references that are stored in association with the unique identification information associated with the machine-readable code, whether the respective electronic reference shall be made available to the second terminal, based on the user-specific information of the user of the second terminal and the access condition for the respective electronic reference; and providing, to the second terminal, those electronic references that shall be made available to the second terminal. The application further relates to a corresponding server coupled to a database, a program, and a computer-readable recording medium.

## Description

### Technical Field

This application relates to methods and apparatus (e.g., servers, rule servers) for providing data to a terminal, for relaying data between terminals, and for controlling access to stored data. The application further relates to providing access and controlling access to actions of, or interactions with, a computing system. The application particularly relates to providing, relaying, and controlling access to data or actions (as examples of resources) that can be uniquely associated with physical objects, e.g., via a machine-readable code or marker, and to providing, relaying, and controlling access to that data or actions in a context-dependent manner.

### Background

Known methods for systematically identifying physical objects include the use of EAN codes, QR codes, serial numbers, and the like. Access to information related to the physical object proceeds through search engines, apps, programs, or URLs of websites. However, these methods fail to provide contextualized access to the information.

Thus, there is a need for improved methods and apparatus that allow for providing data to a terminal, for relaying data between terminals, and for controlling access to stored data. There is further need for methods and apparatus that allow for providing access and controlling access to actions of, or interactions with, a computing system. There is particular need for such methods and apparatus the provide access, in a context-dependent manner, to data and/or actions that are uniquely associated with physical objects by means of machine-readable codes or markers.

### Summary

In view of some or all of these needs, the present disclosure proposes a method, using a server with a database coupled thereto, of providing resources to a terminal, and a corresponding server, coupled to a database, as well as a program and a computer-readable storage medium, having the features of the respective independent claims.

An aspect of the disclosure relates to a method, using a server with a database coupled thereto, of providing resources to a terminal. The terminal (or client device) may be a mobile terminal (e.g. mobile phone, tablet, etc.) or a personal computer, for example. The method may be performed by the server, for example. The method may include receiving unique identification information from a first terminal, wherein the unique identification information is associated with a machine-readable code. The server may maintain information on machine readable codes and associated unique identification information, e.g., in the form of a look-up table. The method may further include receiving, from the first terminal, at least one electronic reference to an external resource together with an access condition for the electronic reference. The external resource may be stored externally to the server/database. The method may further include storing the at least one electronic reference and the access condition in association with the unique identification information in the database. The method may further include receiving data generated by capturing the machine-readable code from a second terminal. The machine-readable code may be a QR code™, a Micro-code, a bar code, a RFID code, a NFC code, an iBeacon™ code, or a SnapTag™ code, for example. The machine-readable code may be read by optical means, by NFC, or by any other suitable technology. The method may further include receiving, from the second terminal, user-specific information of a user of the second terminal. The method may further include determining, based on the data generated by capturing the machine readable code, all those electronic references that are stored in the database in association with the unique identification information associated with the machine-readable code. The method may further include a step of determining the (associated) unique identification information based on the data generated by capturing the machine-readable code. This may be achieved by means of the information on machine readable codes and associated unique identification information, e.g., in the form of a look-up table, that is maintained at the server. The method may further include determining, for each of the electronic references that are stored in association with the unique identification information associated with the machine-readable code, whether the respective electronic reference shall be made available to the second terminal, based on the user-specific information of the user of the second terminal and the access condition for the respective electronic reference. The method may yet further include providing, to the second terminal, those electronic references that shall be made available to the second terminal.

Configured as described above, the method enables anyone who has knowledge of the unique identification information (e.g., a human-readable code, such as a string of letters, numbers, and/or special characters) associated with the machine-readable code to "affix" electronic references to a virtual repository for the machine-readable code. This virtual repository may be referred to as a (virtual) pin board for the machine-readable code throughout this disclosure. By enabling interested parties to affix electronic references to the machine-readable code (or rather, to a physical or virtual object carrying the machine-readable code), data relating to the machine-readable code can be efficiently shared between parties/users. For doing so, the interested parties do not need to give the server access to the external resource referenced by the electronic reference, and access to the external resource can bypass the server, using the electronic reference provided by the server. By further evaluating the respective party's user specific information and comparing it against the access condition for each given electronic reference, electronic references that each party is provided with or may access can vary from party to party, which allows for customizable sharing or providing the corresponding external resources. In particular, the proposed method allows for contextualized access to the external resources. In consequence, each party can efficiently access those external resources that are relevant to that party, while irrelevant external resources (or external resources that are not intended for public access) remain hidden from that party. For doing so, it is not required for the user/party to use a specific application. Rather, it is sufficient to scan the code with a suitable client device (terminal) and transmit it to the server, together with the user-specific information. The client device does not necessarily have to comprise a display for enabling interaction with the server. In general, the proposed method can be said to enable multi-way communication between users/parties (N : N). This method is characterized by allowing for centralized configuration of access to external resources, while the external resources are maintained in a de-centralized manner (e.g., on external servers).

In some embodiments, the method may further include capturing the machine-readable code using a code reading device adapted for capturing the machine-readable code. The code reading device may be coupled to or integrated with the second terminal. Thereby, the user of the second terminal can conveniently access the relevant electronic references, simply by reading (e.g., scanning) the machine-readable code.

In some embodiments, the external resource (electronic resource) may relate to a data item that can be accessed via the electronic reference or to a functionality of an application that can be called via the electronic reference. The data item may be a file, for example. The data item may be referred to as an external data item. The application may be referred to as an external application. The (external) application may be registered with the server. Functionalities (e.g., routines, etc.) of the application may be called through an API that is provided by the server for the application. The term "called" may be understood in the sense of "invoked", for example. Thereby, both data (information) as well as functionalities may be provided to the user of the second terminal, subject to his authorization to access the respective data item or functionality.

In some embodiments, the method may further include providing, to the second terminal, respective authentication tokens for those electronic references that shall be made available to the second terminal. Therein, each authentication token may serve to authenticate the second terminal at a respective external server that stores the respective external resource referenced by the respective electronic reference and may enable the second terminal to access the respective external resource via the respective electronic reference. Thereby, only authorized users may access the respective electronic resources, even if knowledge of the electronic reference (e.g., link) should be gained by other sources. Moreover, the external server is enabled to trace back the user's request for accessing the external resource to an interaction of the user with the server.

In some embodiments, the method may further include receiving, from a third terminal, the data generated by capturing the machine-readable code. The method may further include a step of determining the unique identification information based on the data generated by capturing the machine-readable code. The third terminal may be the same as the second terminal in some implementations. The method may further include receiving, from the third terminal, at least one further electronic reference to an external resource together with an access condition for the further electronic reference. The method may yet further include storing the at least one further electronic reference and the access condition in association with the unique identification information in the database.

Configured as described above, the method enables anyone has access to the machine readable code to "affix" information to the machine-readable code. Thereby, information relating to a physical object carrying the machine-readable code can be efficiently shared between interested parties, subject to their respective authorization to access the data.

In some embodiments, the method may further include registering an external application with the server. The method may yet further include providing an application programming interface, API, for the external application at the server. Therein, at least one of the one or more electronic references may relate to a call to the API.

In some embodiments, the method may further include, for the at least one electronic reference that relates to a call to the API, executing the call to the API if it is determined that the at least one electronic reference that relates to a call to the API shall be made available to the second terminal.

Thereby, the user of the second terminal can be provided with one or more predefined functionalities that can be carried out after reading the machine-readable code by the user, possibly directly in response to reading the machine-readable code.

In some embodiments, the method may further include receiving the data generated by capturing the machine-readable code from a fourth terminal. In some implementations, the fourth terminal may be the same as the second terminal or the third terminal. The method may further include a step of determining the unique identification information based on the data generated by capturing the machine-readable code. The method may further include receiving, from the fourth terminal, user-specific information of a user of the fourth terminal. The method may further include receiving, from the fourth terminal, a request to provide an electronic reference that is stored in the database in association with the unique identification information to an external application that is registered with the server. The method may further include determining whether the requested electronic reference should be made available to the fourth terminal, based on the user-specific information of the user of the fourth terminal and the access condition for the requested electronic reference. The method may yet further include providing, if the requested electronic reference shall be made available to the fourth terminal, the requested electronic reference to the external application via an API for the external application.

Configured as described above, the method enables anyone who has access to the machine-readable code to make information which he is allowed to access available to applications registered with the server. This allows for an efficient means for sharing data in connection with the machine-readable code and for interfacing with applications registered with the server.

In some embodiments, the method may further include receiving the data generated by capturing the machine-readable code from a fifth terminal. In some implementations, the fifth terminal may be the same as the second terminal, third terminal, or fourth terminal. The method may further include a step of determining the unique identification information based on the data generated by capturing the machine-readable code. The method may further include receiving, from the fifth terminal, user-specific information of a user of the fifth terminal. The method may further include receiving, from the fifth terminal, a request to modify the access condition for an electronic reference that is stored in the database in association with the unique identification information such that the electronic resource will be made available to a user of a sixth device. The method may further include determining whether the requested electronic reference should be made available to the fifth terminal, based on the user-specific information of the user of the fifth terminal and the access condition for the requested electronic reference. The method may yet further include modifying, if the requested electronic reference shall be made available to the fifth terminal, the access condition for the requested electronic reference such that the requested electronic reference shall be made available to the sixth terminal.

Configured as described above, the method enables anyone who has access to the machine-readable code to make information which he is allowed to access available to other users by modifying the access condition. This allows for an efficient means for sharing data in connection with the machine-readable code.

In some embodiments, the user-specific information may include at least one of: login information, device information indicating a characteristic of the terminal used by the user, time information indicating a current time, and/or location information indicating a location of the user. The login information may include a username and/or a password. Thereby, whether or not a user may access a certain electronic reference or external resource can be decided based on a broad range of user characteristics, such as the user's identity, the type of device (terminal) he is using, the user's location, the local time at the user's location, or any combination thereof.

In some embodiments, the electronic references may be provided to the second terminal in an ordered manner. In this case, the electronic references may be ordered based on user-specific information for respective users of terminals from which the electronic references have been received by the server. For example, a visual indication for displaying on a display of the second terminal may be provided to the second terminal, and the electronic references may be ordered/arranged in accordance with the user-specific information of the users that have initially sent the electronic references to the server. That is, in some implementations the electronic references may be ordered by their respective origins. Accordingly, a user of the second device can easily assess which electronic references have been provided by which source, which facilitates selecting an appropriate or desired electronic reference.

In some embodiments, the method may further include determining, for each electronic reference that is received by the server, whether the electronic reference satisfies a policy maintained by the server. The policy may be specific to the unique identification information associated with the electronic reference, or it may be a general policy of the server. Thereby, it can be ensured that only trustworthy electronic references are stored by the server, thereby enabling maintenance of a certain level of quality of the service that is provided to the user of the second terminal.

Another aspect of the disclosure relates to a server coupled to a database. The server may include a processor configured to perform the method according to the preceding aspect or any of its embodiments. The server may further include a memory coupled to the processor. The memory may store instructions for the processor that, when executed by the processor, make the processor carry out the steps of the aforementioned method.

Another aspect of the disclosure relates to a program including instructions that when executed by a computer (e.g., processor) cause the computer to perform the method according to the first-mentioned aspect or any of its embodiments.

Yet another aspect of the disclosure relates to a computer-readable recording medium storing the program according to the preceding aspect.

### Brief Description of the Drawings

Example embodiments of the disclosure are explained below with reference to the accompanying drawings, wherein
**Fig. 1** schematically illustrates an example of the general framework of the present disclosure,
**Fig. 2** schematically illustrates various examples of processes for capturing the machine readable code that is attached to a (real or virtual) object according to embodiments of the disclosure,
**Fig. 3** schematically illustrates an example of a framework for data flows for interactions between users and a rule server according to embodiments of the disclosure,
**Fig. 4** schematically illustrates an example of a framework for permission-based individual views and actions in the context of interactions between users and the rule server according to embodiments of the disclosure,
**Fig. 5** schematically illustrates an example of a framework for automated individual actions in the context of interactions between users and the rule server according to embodiments of the disclosure,
**Fig. 6** schematically illustrates an example of a framework for switching operations between different rule servers according to embodiments of the disclosure,
**Fig. 7** schematically illustrates, in flowchart form, an example of a method according to embodiments of the disclosure in which a first user provides an electronic reference that references an external resource to a server (e.g., a rule server) and a second user accesses the external resource,
**Fig. 8** schematically illustrates, in flowchart form, an example of a method according to embodiments of the disclosure in which a third user provides an additional electronic reference that references an external resource to the server,
**Fig. 9** schematically illustrates, in flowchart form, an example of a method according to embodiments of the disclosure in which the external resource relates to an automated action,
**Fig. 10** schematically illustrates, in flowchart form, an example of a method according to embodiments of the disclosure in which an external resource is made available to an application,
**Fig. 11** schematically illustrates, in flowchart form, an example of a method according to embodiments of the disclosure in which an external resource is made available to another user, and
**Fig. 12** schematically illustrates an example of a processing system (e.g., server) for carrying out methods according to embodiments of the disclosure.

### Detailed Description

In the following, example embodiments of the disclosure will be described with reference to the appended figures. Identical elements in the figures may be indicated by identical reference numbers, and repeated description thereof may be omitted.

When an object (e.g., physical or virtual object) is provided with a marker or code, information relating to this marker or code may be retrieved using search engines, applications ("apps"), programs, or URLs of websites. However, this proceeds without regard to the context of the information retrieval. Changing the URL after attaching the marker or code to the object or delivering the information only after authentication may control access to the information, but fail to enable contextualized retrieval of information relating to the marker or code.

Broadly speaking, the present invention aims to enable access to contextualized content and/or execution of contextualized actions responsive to scanning and/or reading a marker (e.g., QR-code, Mircocode, RFID, NFC, or any other machine-readable code/identification/tag/label) that is attached to a physical object or displayed on a display of an electronic device.

Therein, the content and/or actions (as means of interaction) each have an individual code or ID and can be accessed or executed in dependence on certain factors, such as date and/or time, weather, location, and/or authorization of a user or device that scans the marker, or in dependence on a predetermined process.

Such predetermined process may relate to conditions that jointly check a plurality of predefined factors in dependence on each other. This may include, for example, characteristics (possibly including surroundings) of the user or device that scans the marker. Examples of such characteristics include the nationality and profession of the user, version number of a software or operating system (OS) of the device, or authorization and location of the user or device.

In embodiments of the disclosure, a cloud item provides a platform (e.g., a server platform). This platform may be referred to as an Internet of Offline Things (loOT) platform. The platform generates unique identifiers (e.g., machine-readable codes) for all kind of real and virtual objects. These unique identifiers may be referred to as object IDs throughout the disclosure. The platform also has a Permission-System mostly based on Users and Groups which have User IDs and User ID specific settings.

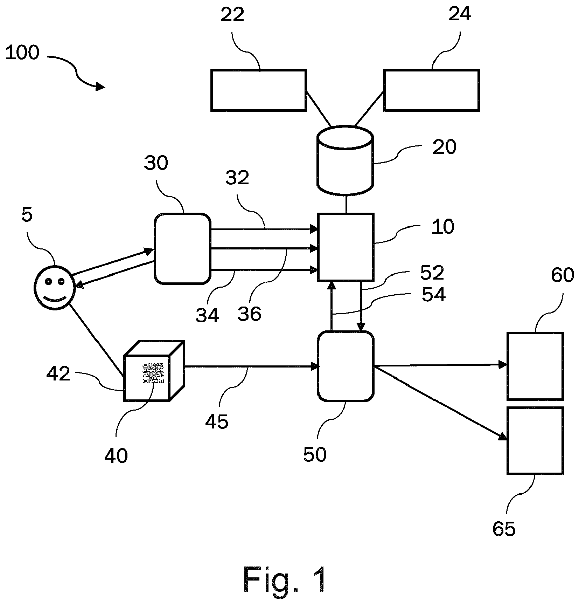

**Fig. 1** schematically illustrates an example of the general framework of the present disclosure. A server (e.g., rule server) 10 is coupled to, or comprises, a database 20. The database 20 maintains (e.g., stores) electronic references 22, 24 to external resources maintained (e.g., stored) on external serves 60, 65. A code 40 is provided on a real or virtual object 42. Here, a virtual object may be an object that is visually represented to a user 5 by means of a display, for example. The code comprises a machine-readable part as well as a human-readable part (unique identification information, e.g., a sequence of letters or numbers). The user 5 can, by operating a first terminal 30, provide the unique identification information 32 to the server 10, together with an access condition 34 and an electronic reference 36 to an external resource stored at an external server. The server 10 will maintain the electronic reference together with the access condition. This may be done, for example, in the form of a module description (or access description) that is stored by the server 10. The module description may be specific for a combination of the machine-readable code and user-specific information indicated by the access condition for the machine-readable code. By operating a second terminal 50 (which must not necessarily be different from the first terminal 30), a user can scan the code 40 to capture an object ID (e.g., the machine-readable code), thereby generating the code data 45. When transmitting, 54, the code data to the server together with user-specific information relating to the second terminal 50, the server 10 checks whether the user-specific information matches an access condition for any electronic reference maintained for the code data 45. If so, the respective electronic references are provided, 52, to the second terminal 50. Using the provided electronic references, the second terminal 50 can access the corresponding external resources on respective external servers 60, 65.

Object IDs (e.g., machine-readable codes or data generated therefrom) can be attached to real objects by a number of different techniques. For example, the object IDs may by attached to objects by all kind of active or passive electromagnetic antenna techniques (e.g., RFID, NFC, etc.), by all kind of machine readable codes (e.g., 1D/2D/3D/4D codes, such as barcodes, QR codes, matrix codes, HCCB codes, unsynchronized 4D barcodes, etc.), by all kind of human or machine readable signs (e.g., letters, characters, symbols, marks, etc.), by all kind of virtual mapping methods which takes the object appearance in combination with other variables (e.g., geolocation, variables set by the user to the client device, etc.) into account, or by mapping to virtual objects. The object IDs may contain, for example an URL of a server (e.g., rule server) and a unique object code as a path.

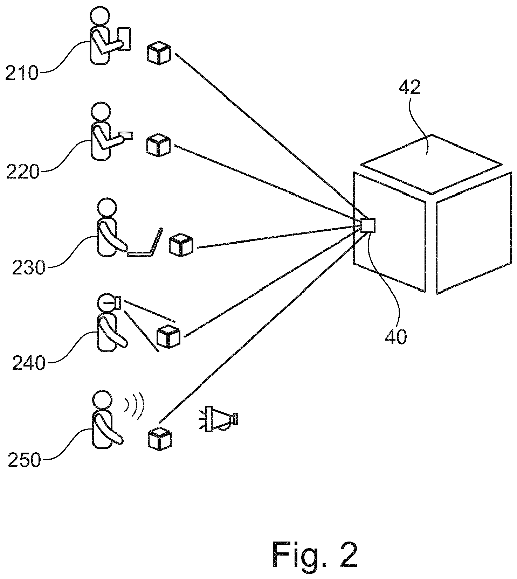

**Fig. 2** schematically illustrates various examples of processes for capturing the machine readable code 40 (object ID) that is attached to (real or virtual) object 42. In particular, the object ID can be scanned, read, or recognized (and then sent to a rule server, for example) by any of the following methods 210 to 250. 210: A user can scan the object ID with the help of a smart phone. 220: the user can scan the object ID with the help of a scanning device or code reader (e.g., a 1D/2D/3D/4D code reader). The code reader may be a code reader with or without display. 230: the user can read a sign or sequence of signs of the object-ID which are attached to the object and input them to their client device (terminal) with the help of Human Interface Device (HID) enabled hardware such as a keyboard, for example. 240: the user can recognize the object ID with the help of hardware that is capable of performing image analysis (picture analysis), such as smart glasses, for example. Such image analysis may automatically recognize the object in combination with other factors. 250: the user can transmit the object ID by voice to a smart speaker using a smart assistant (e.g., Siri, Amazon Alexa, Google). Here and throughout the disclosure, the user can be a person, a machine, or a robot.

After the user has scanned the object (or object ID) and has captured the machine-readable code or object ID, data generated by capturing the machine readable code or object ID (e.g., data representing the object ID) and user-specific information of the user (code data, e.g., a user ID, etc.) are sent to the rule server. The rule server maintains electronic references (e.g., module descriptions) for external resources (e.g., modules). If there are matching module descriptions at the rule server for the received combination of generated data and user-specific information, these module descriptions for respective modules (as examples of external resources) are provided to the user or their client device (terminal). For example, a rule set and settings may be transferred to the user's client device. The rule set can contain information on how to access data (as an example of an external resource) from an external server (e.g., module server). This information may include authentication tokens for authentication with the external server, for example. After this transfer to the user's client device, communication between the user's client device and the external server can proceed directly without further interaction with the rule server.

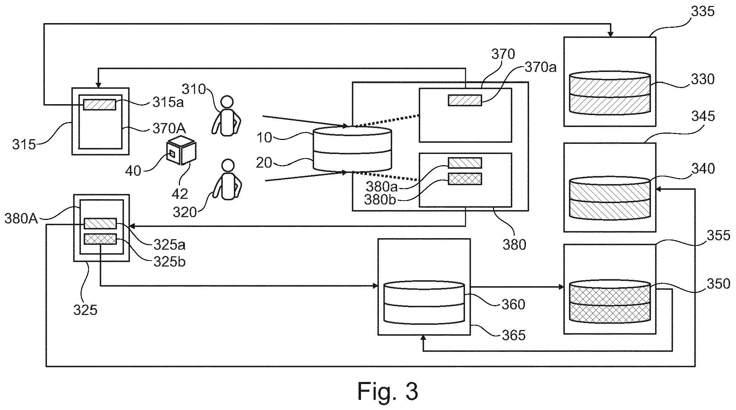

**Fig. 3** schematically illustrates an example of a framework for data flows for the aforementioned interaction between the user and the rule server.

When a user (e.g., user 310 or 320) or user group scans a unique object ID (e.g., in the manner set out above with reference to **Fig. 2**), the object ID (as an example of data generated by capturing the machine-readable code) is transmitted to a server (e.g., rule server) 10. The rule server 10 is coupled to or comprises a database 20. The database 20 can hold different module descriptions (as examples of electronic references) 370, 380 for different users 310, 320 or user groups in relation to each object ID. The relations between the user IDs, the module descriptions, and the unique object IDs determine access conditions to the external resources held by module servers. If a module description exists for a certain unique object ID and user ID, the user can access the corresponding module (as an example of an external resource). If such module description does not exist, the user cannot access the module. Each module description 370, 380 can contain output options (e.g., display options, rendering options, playback options, etc.), information on which rule server to use, a ruleset 370a, 380a that contains rules that describe how to communicate with module servers (as examples of external servers) 330, 340, 350, and/or user or user group specific settings. The user ID or user group ID (as examples of user-specific information) is transmitted to the rule server 10 as well. This may happen when the unique object ID is scanned, or when the user or user group logs in to the rule server. Likewise, if the user 310, 320 has assigned specific variables at the user's client device 315, 325 that can modify or expand the specific module description 370, 380 at the rule server 10, also these specific variables can be transmitted to the rule server 10.

The rule server 10 delivers, to each client device 315, 325, the module description(s) assigned to that client device. In other words, if access conditions permit, electronic references are provided to the client devices. Once the user's client device 315, 325 has loaded the specific module-description, it has all necessary information for accessing the respective module (as an example of an external resource). In particular, the client device may have sufficient information on how to render, display, or play back any additional data that the client device should load in subsequent steps of the communication with the respective module server.

That being said, a specific module description in the context of this disclosure may be user-specific information (e.g., a user ID or user group ID), user (group) settings and an object ID specific set of information that contains data in a format that the user's client device could understand and work with. A module description holds data about the existence of external servers (e.g., module servers) which provide data (e.g., data that is related in any way to the object ID) for the object ID. Any existent server that holds data that the client device (or the client device's software) can interpret and work with may be referred to as an external server or module server in the context of this disclosure. If the client device (or the client device's software) cannot interpret and work with the data provided by the external server, for example when communicating with ordinary servers, a wrapper service server 360 (possibly with a database) can be used to translate the instructions. The wrapper service server 360 is a non-limiting example of an intermediate server between an external server and a respective client device.

The module description may also hold information on how to access the data of the assigned module servers including data about authentication methods (e.g., authentication tokens) needed for accessing the module servers. After the client device 315, 325 has loaded the (user-specific) module description(s) from the rule server 10, it knows which specific data exists on any module servers 330, 340, 350 that are assigned to the combination of the specific object ID and the user-specific information (e.g., including user settings). Furthermore, the client device 315, 325 knows how to access this data without requiring any further information from the rule server 10. From now on, every interaction between the user's client device 315, 325 with module servers 330, 340, 350 for which it has received the module descriptions may proceed without need for the rule server 10 (i.e., bypassing the rule server 10).

To repeat, the existence of a module description for given combination of an object ID and user-specific information may be said to define an access condition for the corresponding data held by the respective module server, in the sense that the user is allowed to access this corresponding data if such module description exists.

Any module server that holds data for the specific module description which is not accessible without any authentication method and which is designed to work with the same authentication tokens as the rule server can be addressed directly by the client device (e.g., the client device's software) and the respective authentication token provided by the rule sever. Any module-server that holds public data without any authentication method for the specific ruleset can be addressed directly by the client device without the need for any authentication token. Any module server that holds data for the specific module description that is not compatible to the client device (e.g., the client device's software) and/or uses its own authentication methods, can be addressed by custom wrapper service servers which are acting in between the module server and the client device. Such wrapper service server may translate all incompatible data or authentication methods from the module server to those that the client device can work with.

Next, an example of a data flow in the framework of **Fig. 3** will be described. A first user 310 transmits a unique object ID (as an example of data generated by capturing a machine-readable code 40) that is scanned or otherwise acquired from an object 42 together with his unique user ID (as an example of user-specific information) to the rule server 10. The user 310 may transmit the data via their client device (terminal) 315. The unique object ID may be acquired by any of the methods described above in the context of **Fig. 2**, for example. The rule server 10 finds a specific module description 370 in accordance with the data transmitted from the user 310. The module description 370 holds information indicating that there exists a first external module server 330 that holds data for the user 310 to access. The rule server transmits this data (i.e., the module description 370), possibly together with information on how to access and render the data from the module-server 330 (e.g., in the form of rule 370a), to the user's client device 315. The client device stores its version 370A of the module description 370. The module description 370A stored by the client device 315 may include a rule 315a corresponding to rule 370a. The user 310 (i.e., their client device 315) is now able to interact with the first module server 330 directly to access the data made available by the first module server 330. When a second user (or user group) 320 scans and transmits the unique object ID of the object 42 together with their unique user ID to the rule server 10, they will receive a different module description 380 from the rule server 10, for a different (second) module server 340, and, in this example, a further external server 350. This module description 380 may include its own rule 380a, as an example of information on how to access and render the data from the module-server 340, as well as rule 380b, as an example of information on how to access and render the data from the further external server 350. The data from the second module server 340 may be accessed directly using the module description 380 (i.e., the version 380A thereof stored by the second user's client device 325, which may include rule 325a corresponding to rule 380a). The client device 325 may further interact and acquire date from the further external server 350, using the module description 380 (i.e., the version 380A thereof stored by the second user's client device 325, which may include rule 325b corresponding to rule 380b), vial the wrapper service server 360. The second user 320 may not see or even be aware that there exists data on the first module server 330 for the first user 310. Likewise, the first user 310 may not see or even be aware that there exists data on the second module server 340 and the further external server 350 for the second user 320. Accordingly, the users are not aware of any module descriptions that do not match their specific combination of unique object ID and unique user ID.

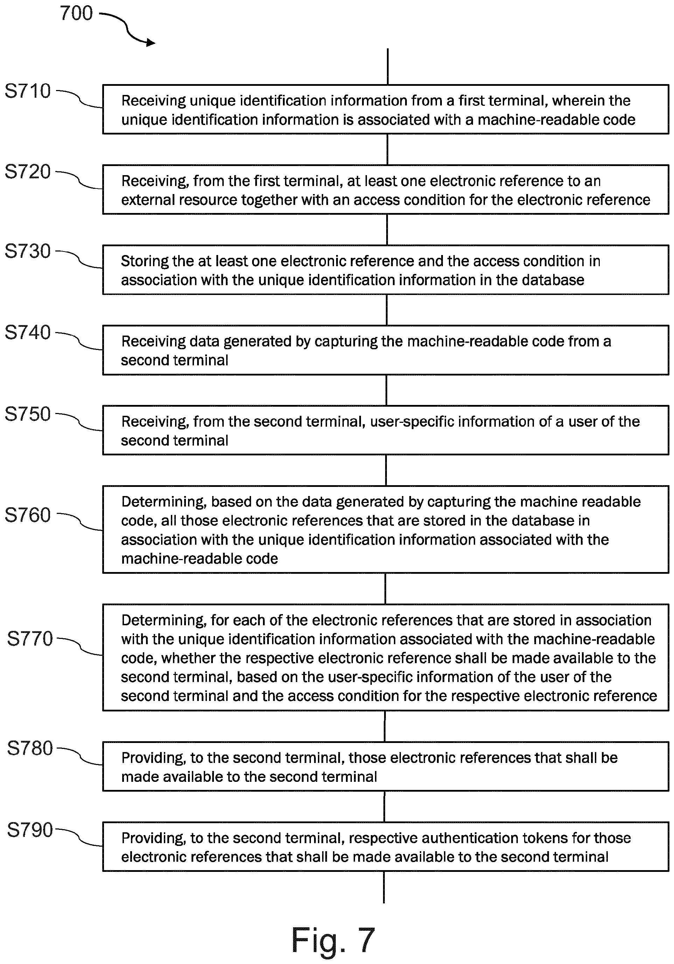

**Fig. 7** schematically illustrates, in flowchart form, an example of a method 700 according to embodiments of the disclosure in which a first user provides an electronic reference that references an external resource to a server (e.g., a rule server, such as rule server 10 described above) and a second user accesses the external resource. This method may be referred to as a method, using a server with a database coupled thereto, of providing resources to a terminal. The external resource may be data held by an external server, such as a module server, for example. In some implementations, the first user may have control over the external server and may seek to provide data that is stored at the external server to a certain user (or user group) that has access to a machine-readable code affixed to a (physical or virtual) object (e.g., object 42 described above). Accordingly, the first user requires that the server enforces access conditions for the external resource, where the access conditions relate to a combination of data generated by capturing the machine-readable code (or "code data" for short) and user-specific information. The server may implement these access conditions in several ways. One non-limiting example is to maintain module descriptions for data stored at external servers (e.g., module servers) that are specific to certain combinations of code data and user-specific information. Existence of a module description for a certain combination of code data and user-specific information then may indicate that a user who has that user-specific information and has generated that code data by scanning a machine-readable code may access the data (as an example of an external resource) that is stored at the external server. However, other methods of implementing the access conditions are feasible as well in the context of the present disclosure.

At step S710, unique identification information is received (at the server) from a first terminal (client device, e.g., operated by the first user). This unique identification information is associated with a machine-readable code. An association between unique identification information (e.g., human-readable code) and corresponding machine-readable codes may be maintained by the server and/or may be made available by the server. For example, machine-readable codes may be issued by an entity together with their unique identification information on demand of an interested party and the respective association may then be stored by the server. In some practical implementations, the unique identification may be printed on a carrier (e.g., a sticker) that carries the machine-readable code.

At step S720, at least one electronic reference to an external resource is received, from the first terminal, together with an access condition for the electronic reference. The external resource may relate to a data item that can be accessed via the electronic reference or to a functionality of an application that can be called via the electronic reference, for example. In some implementations, the electronic reference and the access condition may be in the form of a module description that is specific to a certain combination of code data and user-specific information. In some implementations, the server may analyze the electronic reference and determine whether the electronic reference satisfies a policy maintained by the server.

At step S730, the at least one electronic reference and the access condition are stored in association with the unique identification information in the database. As explained above, this may be done by maintaining a module description for the external resource that is specific to a combination of code data and user specific information as required by the access condition. In other words, the access condition may be implemented by maintaining (storing) appropriate module descriptions at the server, for example.

At step S740, data generated by capturing the machine-readable code ("code data") is received from a second terminal. At this step, the machine-readable code may be captured (e.g., by the second terminal) using a code reading device adapted for capturing the machine-readable code, for example. This code reading device may be coupled to or integrated with the second terminal. In general, a variety of methods for generating the code data are feasible, including, but not limited to, the methods described above in the context of **Fig. 2****.**

At step S750, user-specific information of a user of the second terminal is received from the second terminal. In some implementations, the user-specific information may include at least one of login information of the user, device information indicating a characteristic of the terminal used by the user, time information indicating a current time, and/or location information indicating a location of the user. H is to be noted that the order of steps S740 and S750 may be changed in some implementations.

At step S760, all those electronic references that are stored in the database in association with the unique identification information associated with the machine-readable code are determined based on the data generated by capturing the machine readable code.

At step S770, it is determined, for each of the electronic references that are stored in association with the unique identification information associated with the machine-readable code, whether the respective electronic reference shall be made available to the second terminal, based on the user-specific information of the user of the second terminal and the access condition for the respective electronic reference. H is noted that steps S760 and S770 may be combined into a single step of determining appropriate electronic references that shall be made available to the second terminal.

Steps S760 and S770 may correspond to identifying all those module descriptions that are present for the specific combination of code data and user-specific information. Any those module descriptions that are identified relate to electronic references that should be made available to the second terminal.

At step S780, those electronic references that shall be made available to the second terminal are provided (e.g., transmitted) to the second terminal. This may comprise providing respective module descriptions to the second terminal.

Having knowledge of the electronic references, the user of the second terminal can access the corresponding external resources. If the external resources are data, they can be downloaded and stored at the second terminal. Alternatively, they can be synchronized with an external server holding the external resource when there is a data connection (e.g., internet connection) between the second terminal and the external server. Further alternatively, the external resource can remain at the external server and access by the second terminal if there is a data connection.

If the electronic references are provided to the second terminal for visual display by the second terminal, they may be provided in an ordered manner, thereby enabling ordered display. In general, the electronic references may be provided in an ordered manner, wherein the electronic references are ordered based on user-specific information for respective users of terminals from which the electronic references have been received by the server. This enables for example to sort the electronic references by those entities that have provided the electronic references in the first place.

In some implementations, if the external server applies an authentication method, the server may provide means of authentication to the second terminal. Accordingly, at step S790, respective authentication tokens for those electronic references that shall be made available to the second terminal may be provided to the second terminal. Here, each authentication token may serve to authenticate the second terminal at a respective external server that stores the respective external resource referenced by the respective electronic reference and enables the second terminal to access the respective external resource via the respective electronic reference.

In addition to what has been described above, anyone who has access to the machine-readable code can "affix" electronic references to the object and allow other users, who have also access to the machine-readable code to access that data, possibly subject to access conditions that are specified by whoever adds the electronic reference. An example of a use case for this method is a virtual pinboard that exists for a machine-readable code provided on a publicly accessible object, e.g., a certain landmark, etc. Anyone who scans the machine-readable code (e.g., with their smartphone) can add electronic references to the virtual pinboard for the publicly accessibly object, which may then be accessed by subsequent visitors of the object (provided that the access condition allows such access).

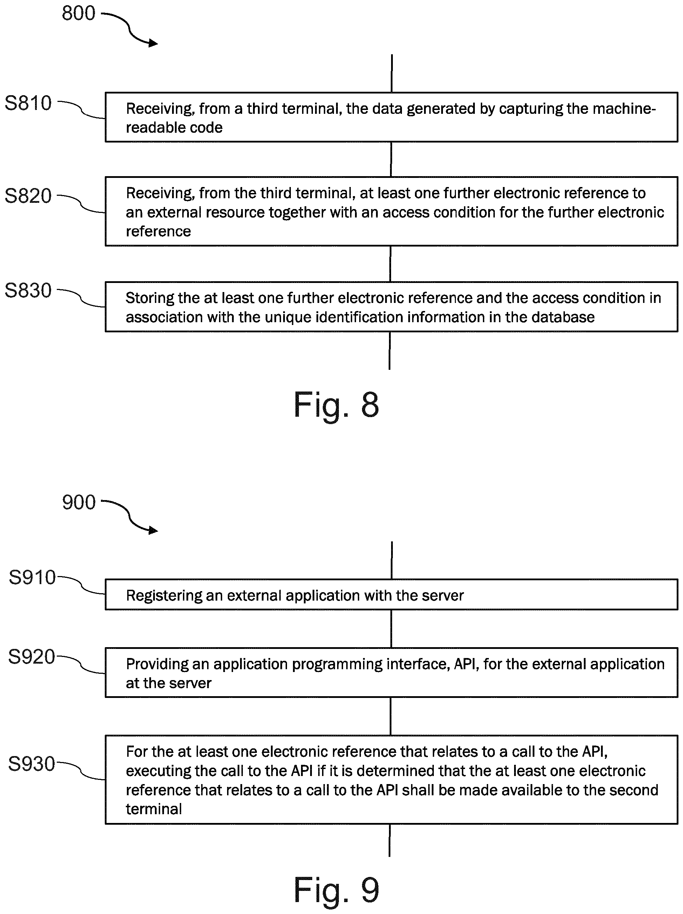

A corresponding method 800 is illustrated, in flowchart form, in **Fig. 8****.**

At step S810, the data generated by capturing the machine-readable code (code data) is received from a third terminal (e.g., the client device of a user that has access to the machine-readable code). This may proceed in analogy to step S740 described above.

At step S820, at least one further electronic reference to an external resource is received, from the third terminal, together with an access condition for the further electronic reference. This may proceed in analogy to step S720 described above.

At step S830, the at least one further electronic reference and the access condition are stored in association with the unique identification information in the database. This may proceed in analogy to step S730 described above.

It is to be noted that the external resources that are managed by the server do not necessarily relate to data, but may also relate to automated actions that can be performed in response to scanning the machine-readable code by a terminal. These automated actions can be executed even without display interactions, simply by scanning the machine-readable code.

A corresponding method 900 is illustrated, in flowchart form, in **Fig. 9****.**

At step S910, an external application is registered with the server. This may involve providing the server with an indication of the external application.

At step S920, an application programming interface, API, is provided for the external application at the server. In this case, at least one of the one or more electronic references (e.g., at the electronic references defined at step S720 above) may relate to a call to the API. The API may be included in a module description for the external server, for example.

At step S930, for the at least one electronic reference that relates to a call to the API, the call to the API is executed if it is determined that the at least one electronic reference that relates to a call to the API shall be made available to the second terminal. For example, if a module description including an API exists for a specific combination of the code data and the user specific information, that module description may be provided to the user's client device (terminal).

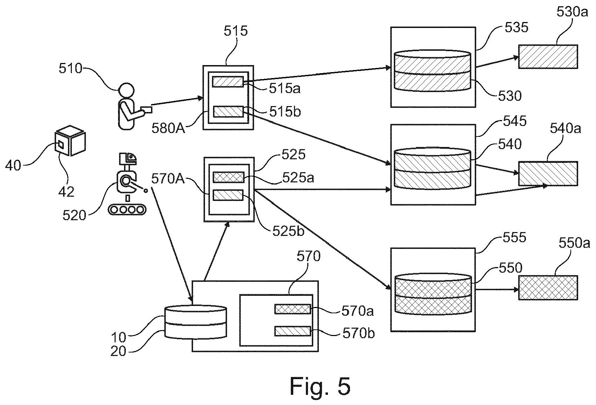

A specific framework for automatically executing automated actions that can be performed in response to scanning the machine-readable code by a terminal will be described below in the context of **Fig. 5****.**

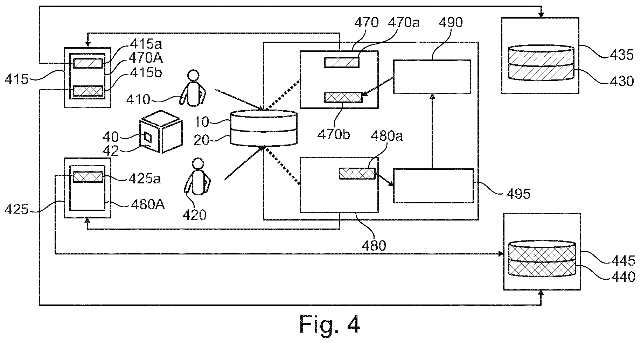

**Fig. 4** schematically illustrates an example of a framework for permission-based individual views and actions in the context of interactions between users and the rule server.

In some implementations, each module description that is assigned to a combination of one or more specific object ID and a user ID (or a user group ID) can be unique. Furthermore, based on permissions associated with each module description, the respective module description can or cannot be modified by other users (or user groups). In that way it is possible for one user (or user group) to add, delete or modify rules for other users (or user groups) if a permission or a set of permissions allows.

Next, an example of a user modifying a module description in the framework of **Fig. 4** will be described.

A second user 420 transmits a unique object ID (as an example of data generating by capturing a machine-readable code 40) of an object 42 together with their unique user ID (as an example of user-specific information) to the rule server 10. In this example, the rule server does not yet maintain a module description for the combination of the object ID and the user ID of the second user 420. At the same time, already one (but only one) rule 470a exists in the rule set of a first module description 470 which applies for a first user (or user group) 410 for the unique object ID of the object 42. The second user 420 then creates a rule 470b in the rule set of the first module description 470, which applies to their own user ID and which enables them to interact with a second module server 440 via their own client device 425 as long as they are logged in with their own user ID. The second user 420 then modifies the rule 470b to also apply for the first user (or user group) 410 within the rule set of the first module description 470. This may be possible due to a specific permission or a set of permissions 490, 495. From now on, each time the first user 410 receives the module description 470, he also receives rule 470b in addition to rule 470a, and is thus able not only to interact with a first module server 430 (module server corresponding to the first module description 470), but also with a second module server 440.

Technically, the second module server 440 may use the same compatible authentication system as the rule server 10. By modifying the rule 470b to apply to the first user 410, the masked user ID (or user group ID) of the first user 410 is added to a list of allowed users at the second module server 440. For interactions with further external servers (e.g., further external server 350 in **Fig. 3**), a wrapper service server (e.g., wrapper service server 360 in **Fig. 3**) would be necessary and would perform the same actions as described above.

Thus, in addition to what has been described above, anyone who has access to the machine-readable code and who has appropriate permission to do so, can make the external resource available to external applications (e.g., residing on external servers) that are registered with the server. Likewise, anyone who has access to the machine-readable code and who has appropriate permission to do so, can make an external resource available to other users, even if the access conditions for that electronic resource (i.e., for the corresponding electronic reference) does not (yet) allow the other users to access the external resource.

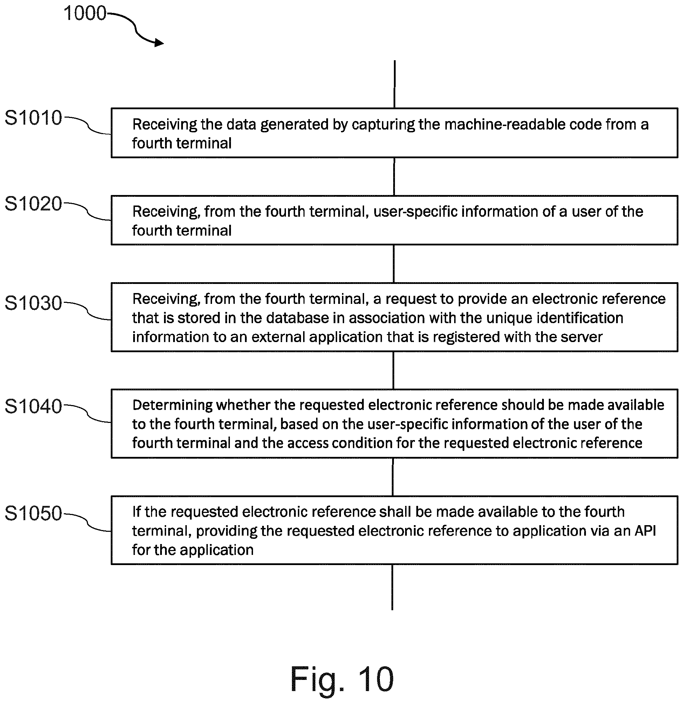

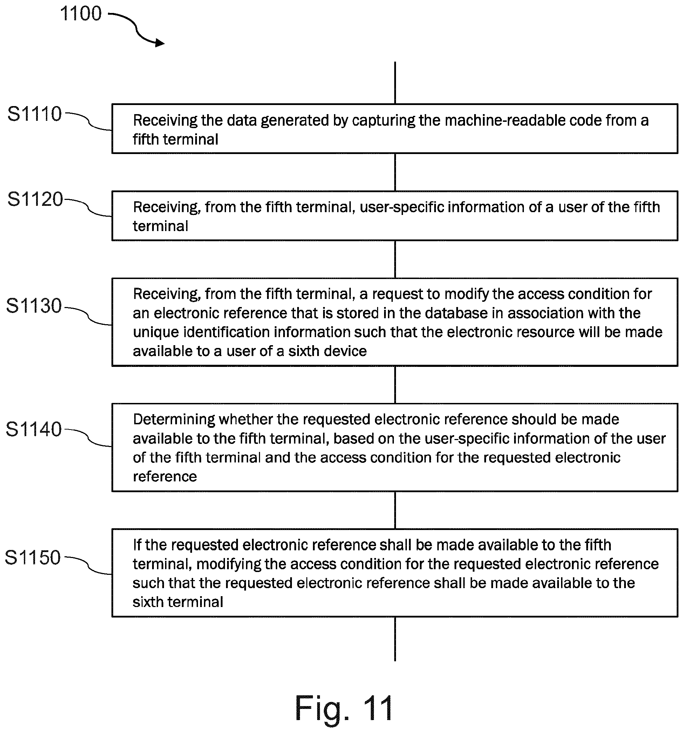

A corresponding method 1000 for the former case is illustrated, in flowchart form, in **Fig. 10****.** A corresponding method 1100 for the latter case is illustrated, in flowchart form, in **Fig. 11****.**

At step S1010 of method 1000 in **Fig. 10**, the data generated by capturing the machine-readable code ("code data") is received from a fourth terminal.

At step S1020, user-specific information of a user of the fourth terminal is received from the fourth terminal.

At step S1030, a request is received from the fourth terminal to provide an electronic reference that is stored in the database in association with the unique identification information to an external application that is registered with the server.

At step S1040, it is determined whether the requested electronic reference should be made available to the fourth terminal, based on the user-specific information of the user of the fourth terminal and the access condition for the requested electronic reference. For example, it may be determined whether a module description exists for the respective external resource (or external server) and for the specific combination of the code data and the user-specific information of the fourth terminal. Yet further, it may be determined whether the fourth user has permission for making the electronic reference available to other users or applications.

At step S1050, if the requested electronic reference shall be made available to the fourth terminal, the requested electronic reference is provided to the application via an API for the application. For example, the aforementioned module description may be provided to the application.

At step S1110 of method 1100 in **Fig. 11****,** the data generated by capturing the machine-readable code ("code data") is received from a fifth terminal.

At step S1120, user-specific information of a user of the fifth terminal is received from the fifth terminal.

At step S1130, a request is received from the fifth terminal to modify the access condition for an electronic reference that is stored in the database in association with the unique identification information such that the electronic resource will be made available to a user of a sixth device.

At step S1140, it is determined whether the requested electronic reference should be made available to the fifth terminal, based on the user-specific information of the user of the fifth terminal and the access condition for the requested electronic reference.

At step S1150, if the requested electronic reference shall be made available to the fifth terminal, the access condition for the requested electronic reference is modified such that the requested electronic reference shall be made available to the sixth terminal. In some implementations, it may be further checked whether the fifth terminal (or a user thereof) has permission to make the electronic reference (or the corresponding external resource) accessible to other terminals/users.

**Fig. 5** schematically illustrates an example of a framework for automated individual actions in the context of interactions between users and the rule server.

Generally, it is possible for each user to individually create settings for each combination of object ID and user ID, on both the client device side and/or the rule server side. In this way it is possible for each user to create settings which work as individual triggers for automated actions which do not need any further Input from the user after transmitting a combination of an object ID and a user ID to the rule server. This applies to all methods of generating code data by capturing a machine-readable code described above in the context of **Fig. 2****.**

Next, an example of an automated action in the framework of **Fig. 5** will be described.

This example assumes a first user 510 and a second user (or user group) 520 who have both already transmitted a unique object ID of an object 42 together with their respective unique user ID to the rule server 10, and whose client devices 515, 525 have already received respective rule sets within respective module descriptions 570A, 580A. If the first user 510 scans the code 40 on the object 42, the module description 580A, which was already received before and then modified in its settings by the first user 510 at their client device 515 to not again route to the rule server 10 to receive the module description 580A (as it had been the default action before), but to directly access the corresponding module servers 530 and 540 to trigger custom actions 530a and 540a, respectively, as defined in the respective rules 515a and 515b. In this case, the first user's client device 515 does not need any further input actions (e.g., from a scanner device or a smartphone interface) to scan and transmit the object ID and the user ID.

Another example of an unattended "scan to action" flow is described with reference to the second user 520. This flow goes through the rule server 10 where a custom setting for the module description 570 applies for the rule set 570a, 570b. By this custom setting, the module description 570 is then transmitted to the second user's client device 525, together with information to directly trigger actions 540a and 550a at the module servers 540 and 550, respectively, without further input from the second user 520.

In general, the proposed technique enables interactive communication and to maintain user-specific settings at the server to allow for direct addressing of data nodes at external servers that are registered with the rule server. In particular, it is possible (e.g., after suitable configuration of the rule server) to directly send execution commands from arbitrary terminals (e.g., internet-connected terminals) to arbitrary data nodes at arbitrary registered external servers, depending on predefined criteria (e.g., access conditions). Doing so, it is also possible to make a case distinction based on the code data and the user-specific information.

In one example implementation of the above, a terminal with a client certificate X in country Y and user role Z (as examples of the user-specific information) scans code A and thereby triggers case 1. That is, the terminal transmits the code data to the rule server. Given criteria (X, Y, Z) the rule server sends respective data signals to first and second external servers, without having knowledge of the meaning of these data signals. The first external server may be configured to execute a first action (e.g., "inventory"), while the second external server may be configured to execute a second action (e.g., "create invoice") on its specific data node. These actions can be triggered automatically by the terminal, without need for a display or any further user input, simply by scanning the code and transmitting the code data to the rule server together with the user-specific information.

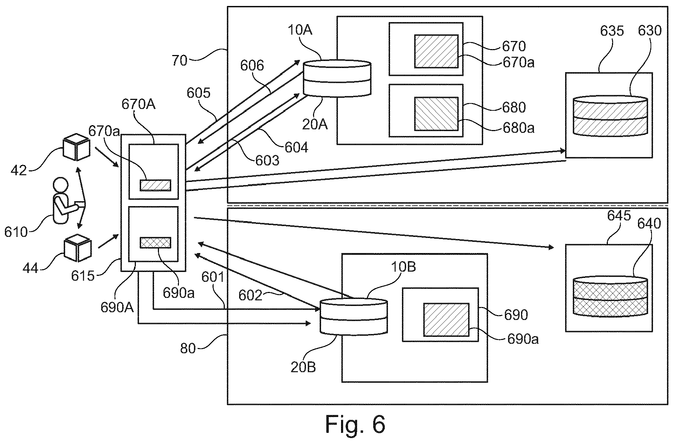

**Fig. 6** schematically illustrates an example of a framework for switching operations between different rule servers.

Any rule in any ruleset in any module description can hold information about which rule server it should use for all specific combinations of object-IDs and user IDs (and possibly, user settings). In that way it is possible to use many different rule servers which are able to sync or not to sync their module descriptions and rule sets depending on the individual settings. This enables the option to have for example some object IDs which are only handled by a first rule server 10A (with a database 20A) which has for example only a connection to an Intranet 70 (e.g., a company's intranet) without Internet connection, and at the same time have different rules for different combinations which use a different, second rule server 10B (with a database 20B) on the Internet 80. If a user (or user group) gets permission for the client device software instance to set a rewrite or fallback address for the rule server, it is possible to switch between rule servers for fallback scenarios, load balancing, or the switching of rule server providers.

An example of such switching of rule servers is described next.

A user 610 scans a first unique object ID from a first object 42, in accordance with a rule 670a received from a former scan in a former data exchange between the first rule server 10A and the user's client device 615. The rule 670a (e.g., within a module description 670A stored at the client device 615) contains information (e.g., instructions) to use the first rule server 10A, which enables the client device 615 to interact with a first module server 630 (e.g., to acquire data from the first module server 630). In this example, the first module server 630 and the first rule server 10A are present on the intranet 70.

A subsequent scan of another object 44 with a different object ID leads to rule 690a within the module-description 690A which instructs the client device 615 to use the second rule server 10B which transmits an updated version of the rule 690a to the client device 615. The updated version of the rule 690a may contain for example information about an "API-call update" for the communication with the second rule server 10B, but no update as regards which rule serve to use in the future. Accordingly, the rule's 690a information on which rule server to use is not changed and does not indicate switches of rule servers for future usage. Using the rule 690a, the client device 615 is able to interact with a second module server 640, which is present in the internet 80.

A further subsequent scan of the second object 44 (leading to information flow 601) and the second rule server's 10B answer thereto (information flow 602) then would work with new API instructions for the second module server 640 but also has an update from the second rule server 10B to rule 690a which instructs to use the first rule server 10A from now on. Responsive thereto, the client device 615 then sends the combination of object ID and user ID (information flow 603) to the first rule server 10A. In the present example, there exists a corresponding rule 680a at the first rule-server 10A which updates rule 690a at the client device 615 (information flow 604) to match the module description 680 including the rule 680a at the first rule server 10A, and enables the client device 615 through its module description rules to interact with the first module server 630 within the intranet (information flow S605 and 606).

The present disclosure further relates to a server coupled to a database, wherein the server comprises a processor configured to perform any of the methods described throughout the disclosure.

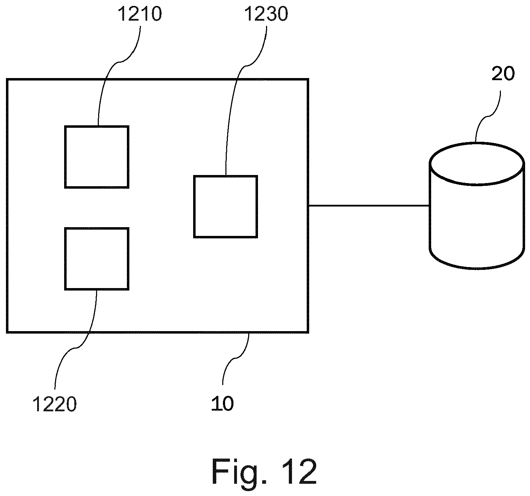

In accordance with the above, **Fig. 12** schematically illustrates an example of a processing system (e.g., server) 10 for carrying out methods according to embodiments of the disclosure. The processing system 10 is coupled to (or comprises) a database 20. The processing system 10 further comprises a processing unit (e.g., processor, possibly comprising one or more CPUs) 1210 adapted to carry out the method steps described in the present disclosure. The processing system may further comprise interfaces 1220 and 1230 for communication with client devices and the database 20, respectively.

The present disclosure further relates to programs including instructions that when read by a computer cause the computer to perform any of the methods described throughout the disclosure and to computer-readable recording media storing such programs.

A possible application scenario for embodiments of the disclosure is described next. It is understood that "pinboards" and "slips of papers" are virtual entities provided by a server that can have representations accessible to a human user, e.g., a graphical representation on a display. It is further understood that the pinboards may relate to the aforementioned external resources and the slips of paper may relate to the aforementioned electronic references.

A code generated by an entity associated with the rule server (e.g., owning the rule server) links to a first (virtual) pinboard on the internet. The code is associated with a real or virtual object or product and includes both a machine-readable code part and a human-readable code part. The first pinboard may be present on or provided by the rule server. On this pinboard, there may be (virtual) slips of papers linking to (or showing) the content (i.e., virtual slips of paper) of other pinboards that do not need to be physically present on the first pinboard. That is, the other pinboards may be present on or provided by external servers. The first pinboard may provide an overview over all connected pinboards. The first pinboard may further include a first slip of paper providing an overview over all other pinboards that can be linked to the first pinboard. There a user can find further slips of papers with addresses that can be affixed to the first pinboard to link other pinboards to the first pinboard.

A manufacturer of the product can now affix a second slip of paper to the first pinboard with an address linking to a second pinboard of the manufacturer. For instance, the second pinboard may have a title indicating "product information." This second pinboard can include slips of paper that describe properties or characteristics of the product.

A vendor can now affix, for example, a third slip of paper with a title indicating "product invoice" and a fourth slip of paper with a title indicating "order accessories for product." The third and fourth slips of paper link to third and fourth pinboards, respectively, that are present on or provided by an external server of the vendor. The third pinboard includes information on an invoice for the product and the fourth pinboard includes information on accessories for the product.

A purchaser of the product can now affix another slip of paper to the first pinboard with a title indicating "insurance for product" and an address linking to a fifth pinboard present on or provided by an external server of an insurance company. The purchaser can grant the insurance company access to information on the manufacturer's and/or vendor's pinboards, if he has permission to do so. Thereby, information from any of the second to fourth pinboards can be provided to the insurance company's pinboard. The insurance company may elaborate an offer for an insurance contract for the product which the purchaser may view on the first pinboard, but which the manufacturer and vendor cannot view.

Notably, all users of the framework or system described above can view only those slips of paper on the first pinboard for which they have permission to access. They can add or remove slips of papers without affecting the other users' views of the first pinboard, if this is of interest.

It should be noted that the features of the method described above may correspond to respective apparatus features (of, e.g., a server performing the method) that may not be explicitly described, for reasons of conciseness, and vice versa. The disclosure of the present document is considered to extend also to such apparatus (e.g., servers). For example, the method steps described above may correspond to respective units that are adapted to perform these steps. These units may be implemented by a processor of a computing device (such as a server), for example. In other words, the processor may be adapted to perform the aforementioned method steps.

It should further be noted that the description and drawings merely illustrate the principles of the proposed antenna. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed method and system. Furthermore, all statements herein providing principles, aspects, and embodiments of the invention, as well as specific examples thereof, are intended to encompass equivalents thereof.

## Claims

1. A method, using a server with a database coupled thereto, of providing resources to a terminal, the method comprising:
receiving unique identification information from a first terminal, wherein the unique identification information is associated with a machine-readable code;
receiving, from the first terminal, at least one electronic reference to an external resource together with an access condition for the electronic reference;
storing the at least one electronic reference and the access condition in association with the unique identification information in the database;
receiving data generated by capturing the machine-readable code from a second terminal;
receiving, from the second terminal, user-specific information of a user of the second terminal;
determining, based on the data generated by capturing the machine readable code, all those electronic references that are stored in the database in association with the unique identification information associated with the machine-readable code;
determining, for each of the electronic references that are stored in association with the unique identification information associated with the machine-readable code, whether the respective electronic reference shall be made available to the second terminal, based on the user-specific information of the user of the second terminal and the access condition for the respective electronic reference; and
providing, to the second terminal, those electronic references that shall be made available to the second terminal.

2. The method according to claim 1, further comprising:
capturing the machine-readable code using a code reading device adapted for capturing the machine-readable code,
wherein the code reading device is coupled to or integrated with the second terminal.

3. The method according to claim 1 or 2, wherein the external resource relates to a data item that can be accessed via the electronic reference or to a functionality of an application that can be called via the electronic reference.

4. The method according to any one of the preceding claims, further comprising:
providing, to the second terminal, respective authentication tokens for those electronic references that shall be made available to the second terminal,
wherein each authentication token serves to authenticate the second terminal at a respective external server that stores the respective external resource referenced by the respective electronic reference and enables the second terminal to access the respective external resource via the respective electronic reference.

5. The method according to any one of the preceding claims, further comprising:
receiving, from a third terminal, the data generated by capturing the machine-readable code;
receiving, from the third terminal, at least one further electronic reference to an external resource together with an access condition for the further electronic reference; and
storing the at least one further electronic reference and the access condition in association with the unique identification information in the database.

6. The method according to any one of the preceding claims, further comprising:
registering an external application with the server; and
providing an application programming interface, API, for the external application at the server,
wherein at least one of the one or more electronic references relates to a call to the API.

7. The method according to preceding claim, further comprising:
for the at least one electronic reference that relates to a call to the API, executing the call to the API if it is determined that the at least one electronic reference that relates to a call to the API shall be made available to the second terminal.

8. The method according to any one of the preceding claims, further comprising:
receiving the data generated by capturing the machine-readable code from a fourth terminal;
receiving, from the fourth terminal, user-specific information of a user of the fourth terminal;
receiving, from the fourth terminal, a request to provide an electronic reference that is stored in the database in association with the unique identification information to an external application that is registered with the server;
determining whether the requested electronic reference should be made available to the fourth terminal, based on the user-specific information of the user of the fourth terminal and the access condition for the requested electronic reference; and
if the requested electronic reference shall be made available to the fourth terminal, providing the requested electronic reference to the external application via an API for external the application.

9. The method according to any one of the preceding claims, further comprising:
receiving the data generated by capturing the machine-readable code from a fifth terminal;
receiving, from the fifth terminal, user-specific information of a user of the fifth terminal;
receiving, from the fifth terminal, a request to modify the access condition for an electronic reference that is stored in the database in association with the unique identification information such that the electronic resource will be made available to a user of a sixth device;
determining whether the requested electronic reference should be made available to the fifth terminal, based on the user-specific information of the user of the fifth terminal and the access condition for the requested electronic reference; and
if the requested electronic reference shall be made available to the fifth terminal, modifying the access condition for the requested electronic reference such that the requested electronic reference shall be made available to the sixth terminal.

10. The method according to any one of the preceding claims, wherein the user-specific information includes at least one of:
login information;
device information indicating a characteristic of the terminal used by the user;
time information indicating a current time; and/or
location information indicating a location of the user.

11. The method according to any one of the preceding claims,
wherein the electronic references are provided to the second terminal in an ordered manner; and
wherein the electronic references are ordered based on user-specific information for respective users of terminals from which the electronic references have been received by the server.

12. The method according to any one of the preceding claims, further comprising:
for each electronic reference that is received by the server, determining whether the electronic reference satisfies a policy maintained by the server.

13. A server coupled to a database, the server comprising a processor configured to perform the method according to any one of the preceding claims.

14. A program including instructions that when read by a computer cause the computer to perform the method according to any one of claims 1 to 12.

15. A computer-readable recording medium storing the program according to claim 14.
